# EUROPEAN PATENT SPECIFICATION

(11) **EP 1 236 441 B1**
(45) Date of publication and mention of the grant of the patent: **06.09.2006**
(21) Application number: 02003955.8
(22) Date of filing: 22.02.2002
(51) Int. Cl.: A61C 5/02, B23P 15/32

(54) **Dental reamer**
Dentale Reibahle
Alésoir dentaire

(30) Priority: 28.02.2001 JP 2001055417
(43) Date of publication of application: 04.09.2002
(73) Proprietor: Mani, Inc., Shioya-gun, Tochigi-ken (JP)
(72) Inventor: Matsutani, Kanjii, Shioya-gun, Tochigi-ken (JP); Murai, Hidejuki, Shioya-gun, Tochigi-ken (JP); Takase, Toshiyuki, Shioya-gun, Tochigi-ken (JP)
(74) Representative: Patentanwälte Westphal, Mussgnug & Partner

(56) References cited:
- EP-A- 0 985 383
- DE-A- 3 429 277
- US-A- 5 980 250

## Description

### BACKGROUND OF THE INVENTION

### 1. Field of the Invention

This invention relates to a dental reamer for forming a root canal and, more particularly, to a dental reamer suited for forming a root canal when attached to a handpiece and driven by an engine.

### 2. Description of Related Art

In dental treatment, a surface of a calcificated root canal wall is cut while removing the cut debris and content filled inside the root canal to expose a new surface of the root canal wall and form a root canal. As for tools for forming the root canal, files and reamers are available in various designated sizes, as in DE 3429277.

A file has a spiral working portion with a relatively short pitch, and is mostly used with a push-pull action to cut a root canal wall and remove the cut debris and content. A reamer has a twisted working portion with a relatively large pitch, and is mostly used with a rotary action to cut a root canal wall and remove the cut debris and content.

Since a root canal has a curving shape becoming narrower toward the root apex and since the root canal comes in different shapes among individuals, the file or the reamer are required to be delicately used for forming the root canal. Therefore, physicians use the file or the reamer in a hand-held manner in means to sense the stage for forming the root canal through the slight feel of the hand and to form the root canal while avoiding excessive digging into the root canal wall and avoid deviation.

Forming a root canal manually with the file or reamer requires much time since the rate of reciprocating movement and rotation thereof are low. Therefore, a sharp cutting-edge is formed to the file or the reamer to improve cutting quality and increase the cutting amount per stroke. Nevertheless, as long as the file or the reamer is used manually, there are limits to shortening the time required for forming the root canal.

In means to solve the foregoing problem, the file or the reamer could preferably be attached to a handpiece and be driven by an engine. With such engine-driven file or reamer, cutting efficiency upon the root canal wall will improve and the root canal can be formed in a short time since the rate of the reciprocating movement or the rotary movement would be several hundreds of times per minute. However, since the manually used file or reamer has a sharp cutting-edge formed thereto, the engine-driven file or reamer easily causes digging into the root canal wall, and raises problems of elongation and damaging of the working portion.

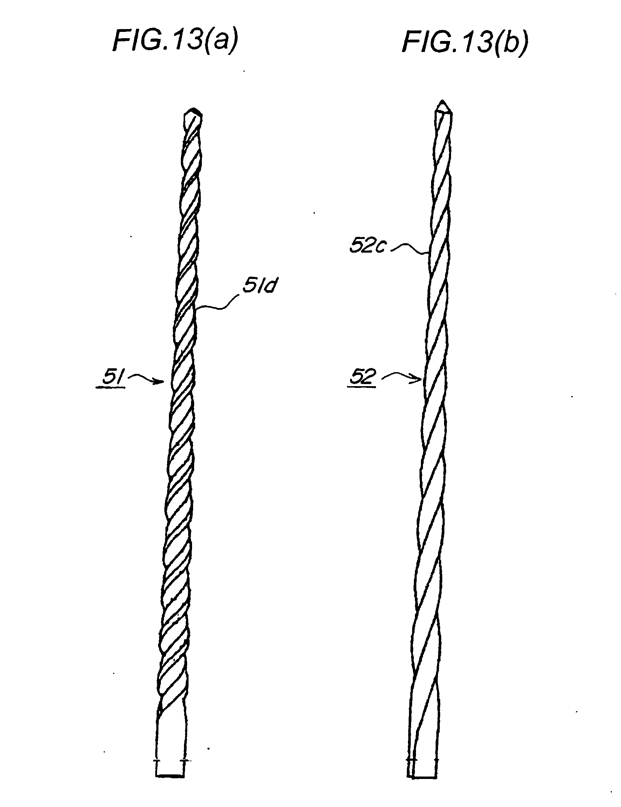

Accordingly, the file or the reamer for attachment upon a handpiece is formed without a sharp cutting-edge to prevent digging into the root canal wall. Shown in FIG.13 (a) is an example of the foregoing file, in which the file is comprised of a shape-memorizing alloy including Nickel (Ni)-Titanium (Ti) (hereinafter referred as "NiTi file"), and shown in FIG.13 (b) is an example of the foregoing reamer, in which the reamer is comprised of stainless steel (hereinafter referred as "engine reamer").

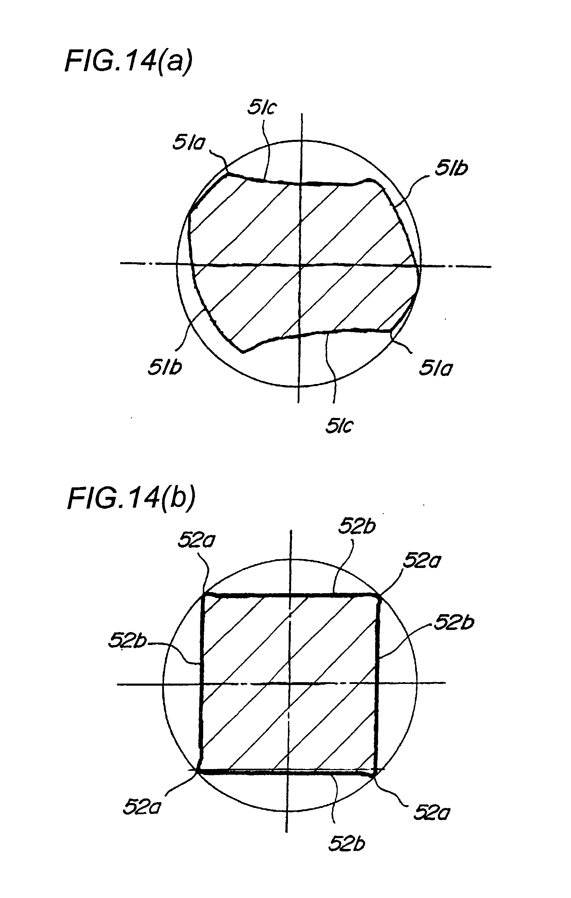

With a NiTi file 51, an outer peripheral surface of a taper material corresponding to a predetermined size number is ground by a grinding means while the material and the grinding means are twisted in relation to each other and shifted in an axial direction for forming a spiral working portion 51d, in which the spiral working portion 51d is formed with a prescribed lead and has a cross section formed of two cutting portions 51a, two flanks 51b and two faces 51c, as shown in FIG.14 (a). With an engine reamer 52, an outer peripheral surface of a taper material corresponding to a predetermined size number is ground by a grinding means to form an elongated cross section and is then twisted by a twisting means for forming a twisted working portion 52c, in which the twisted working portion 52c is formed with a prescribed lead, and has a cross section formed of a cutting portion 52a and a flat plane 52b.

Nevertheless, both the NiTi file and the engine reamer are unsatisfactory and have numerous problems to be solved. For example, although the NiTi file has a high flexibility, the NiTi file rarely creates elongation from a shape memorizing characteristic thereof, and is difficult to visually confirm the state of fatigue of the working portion. Therefore, the NiTi file has a possibility of sudden fracture when forming a root canal.

In producing the NiTi file, a shape memorized material is used for processing the working portion; however, since a plastic deformation method cannot be used for the NiTi file, a twist-processing method for forming the working portion into a twist shape cannot be applied upon the NiTi file, and instead, the NiTi file requires to be applied with a complicated processing method where a material is ground while such material and a grinding means are shifted in association with each other. Accordingly, the NiTi file raises a problem of excessive increase in production cost.

Meanwhile, the engine reamer has insufficient flexibility, is unable to trace along the curved portion of the root canal, creates deviation, and is unable to form a satisfactory root canal due to digging into the root canal wall caused by high cutting quality thereof.

It is an object of this invention to provide a dental reamer for preventing digging into the root canal wall and for preventing deviation.

### SUMMARY OF THE INVENTION

For solving the aforementioned problems, the present inventors had produced numerous test pieces and performed extensive experiments for developing a dental reamer (hereinafter simply referred as "reamer"), which has a preferable tracing property with respect to a complicated curved root canal while maintaining high flexibility, is capable of preventing digging into the root canal wall and preventing deviation even when being attached to a handpiece and driven by an engine thereof, and is capable of forming a root canal in a short time.

As a result, by forming a spiral working portion by twisting a tapered rod having a lateral cross section shaped from being cut out by two lines with a center of a circle and two arcs left remaining, the present inventors created a reamer having high flexibility and being capable of satisfactorily forming a root canal in a state driven by an engine at a high rotating rate without digging into the root canal wall and without deviation.

Even when the reamer cuts the root canal wall by being attached to a handpiece and driven by an engine at high rotary rate incomparable to that of a manual operation, the root canal wall will not be excessively cut so that digging into the root canal wall and deviation can be prevented.

More particularly, since the working portion is twisted with the two arcs left remaining, the contacting portion between the arcs and the cut out lines will not have an edged shape, but will have a shape gradually curving from the cut out lines to a direction toward the arcs, and thus the arc will have a greater curvature than that of the arc of the original circle.

Accordingly, even when the working portion is driven by an engine and contacted upon the root canal wall, the portion of the original circle would be pressed against the surface of the root canal wall in a rubbing manner without excessive cutting the root canal wall. Therefore, since digging into the root canal wall can be prevented and since the root canal wall will not be cut excessively, deviation will not be created.

### BRIEF DESCRIPTION OF THE DRAWINGS

The above and other objects and features of the invention are apparent to those skilled in the art from the following preferred embodiments thereof when considered in conjunction with the accompanied drawings, in which:
FIG. 1 is an explanatory view showing an entire structure of a reamer;
FIG.2 is an explanatory view showing a cross sectional shape of an working portion viewed from II-II of FIG.1;
FIG.3 is a schematic view showing an example of a twist molding apparatus used when forming an working portion;
FIG.4 is an explanatory view showing a cross sectional shape of an intermediary material;
FIG.5 is a cross sectional view of an working portion when the intermediary material having a cross sectional shape shown in FIG.4 is formed by twist-processing;
FIG.6 is a view showing the results of root canals formed with a reamer of this embodiment, a NiTi file and an engine reamer;
FIG.7 is a view comparing the time for forming a root canal with use of plural test pieces of this invention, a NiTi file, and an engine reamer, where all of which are size number 20;
FIG.8 is a view showing a result of a comparison of the bending torque of plural test pieces of this invention, a NiTi file, and an engine reamer;
FIG.9 is a view showing a result of a comparison of the twisting torque of plural test pieces of this invention, a NiTi file, and an engine reamer;
FIG.10 is a view showing a comparison in a twist-fracture angle of plural test pieces of this invention, a NiTi file, and an engine reamer;
FIG.11 is a view comparing the time for forming a root canal between a test piece of this invention and a test piece before twist-processing is applied thereto;
FIG.12 is a view comparing the time for forming a root canal with use of plural test pieces of this invention, a NiTi file, and an engine reamer, where all of which are size number 40;
FIG.13 is an explanatory view showing a NiTi file and an engine reamer; and
FIG.14 is an explanatory view showing a cross sectional shape of the working portion for a NiTi file and an engine reamer.

### DESCRIPTION OF THE PREFERRED EMBODIMENTS

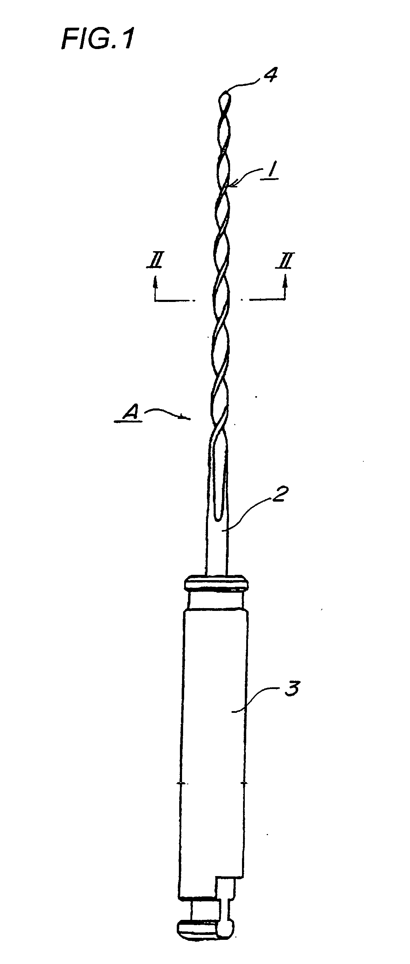

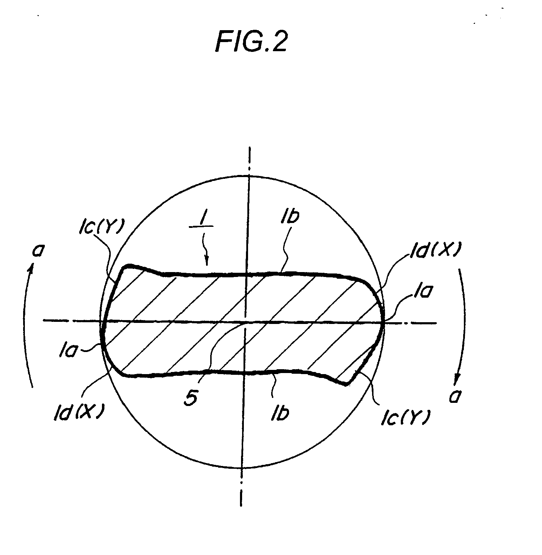

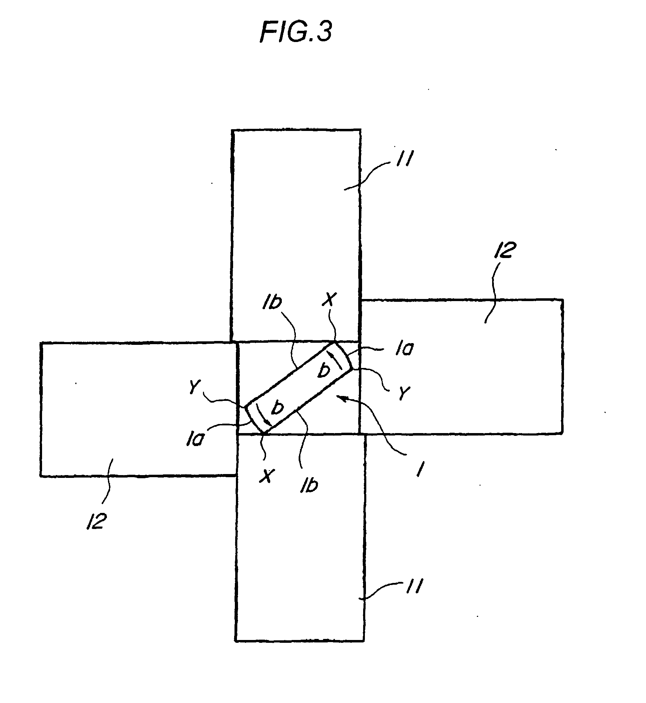

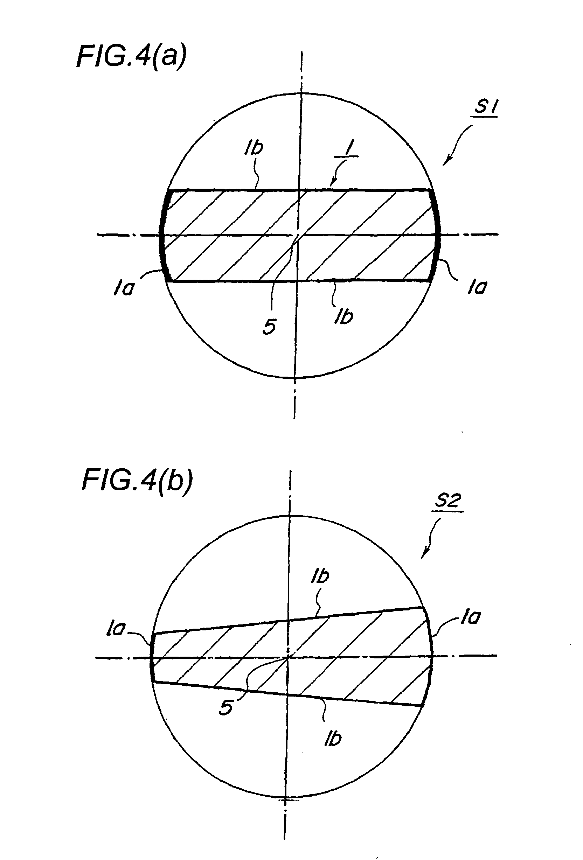

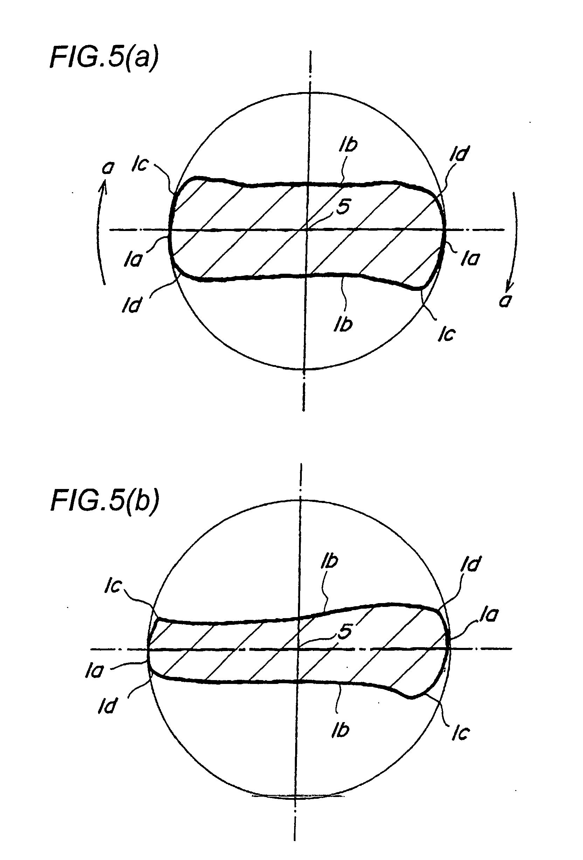

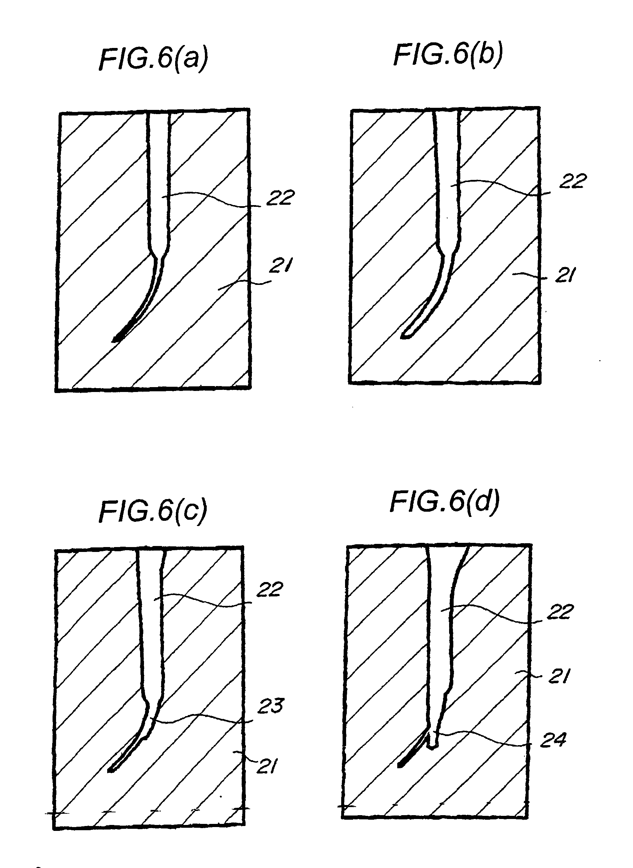

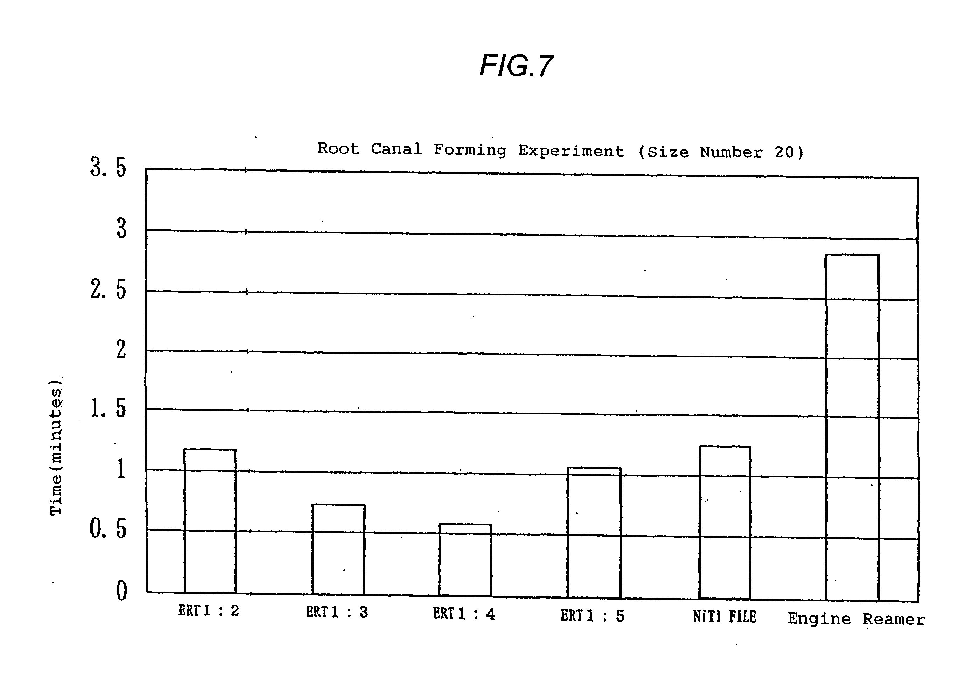

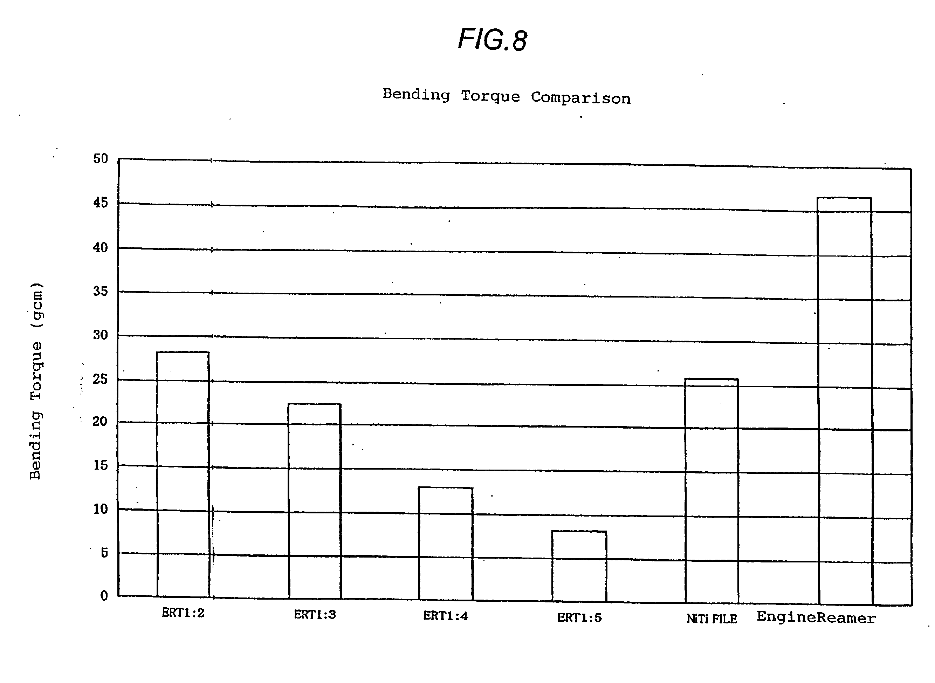

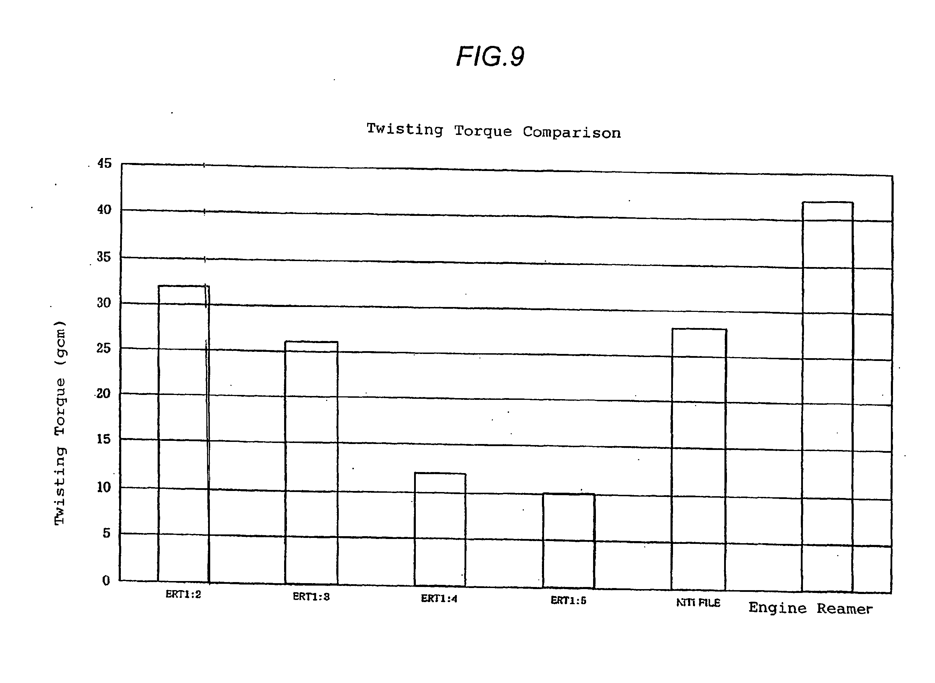

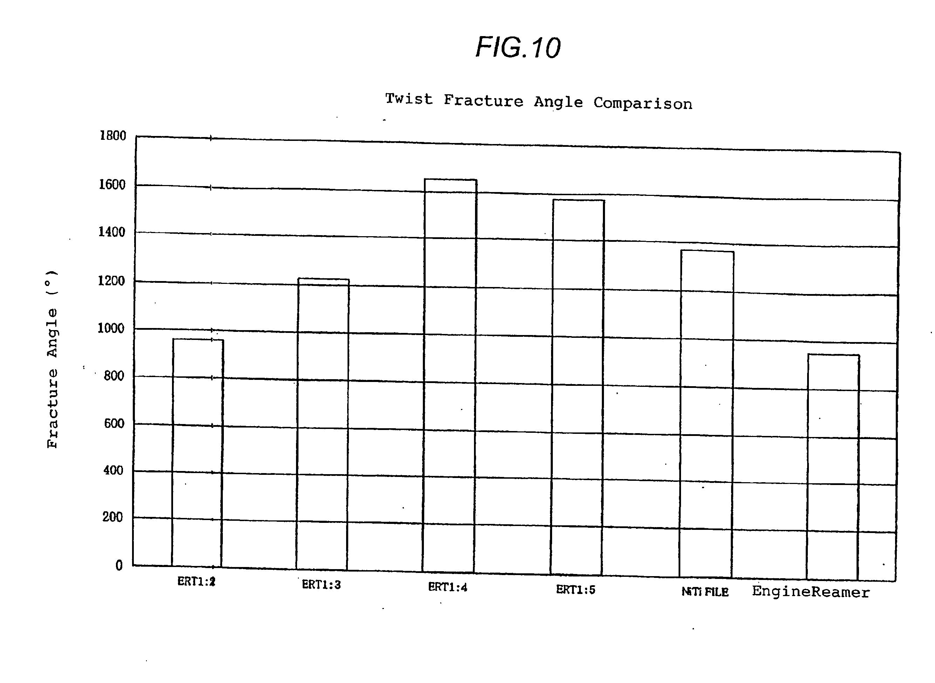

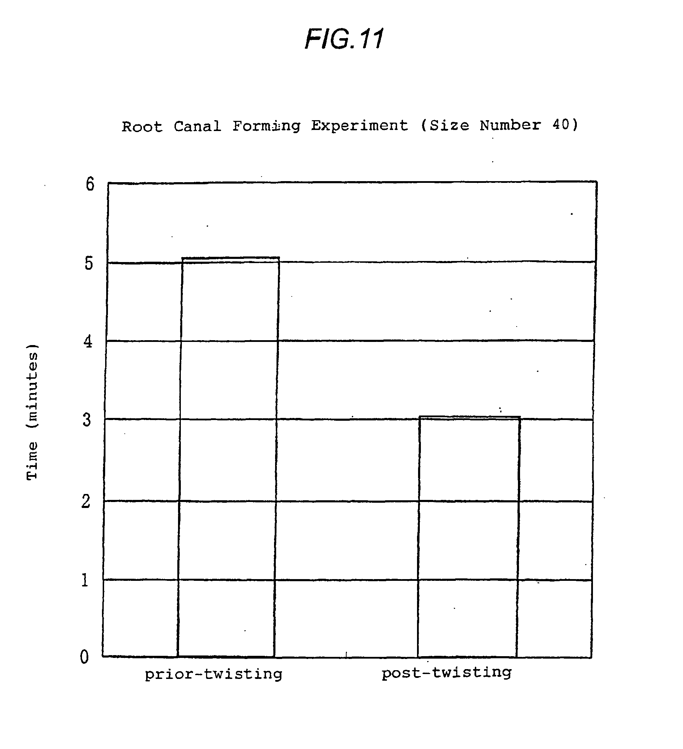

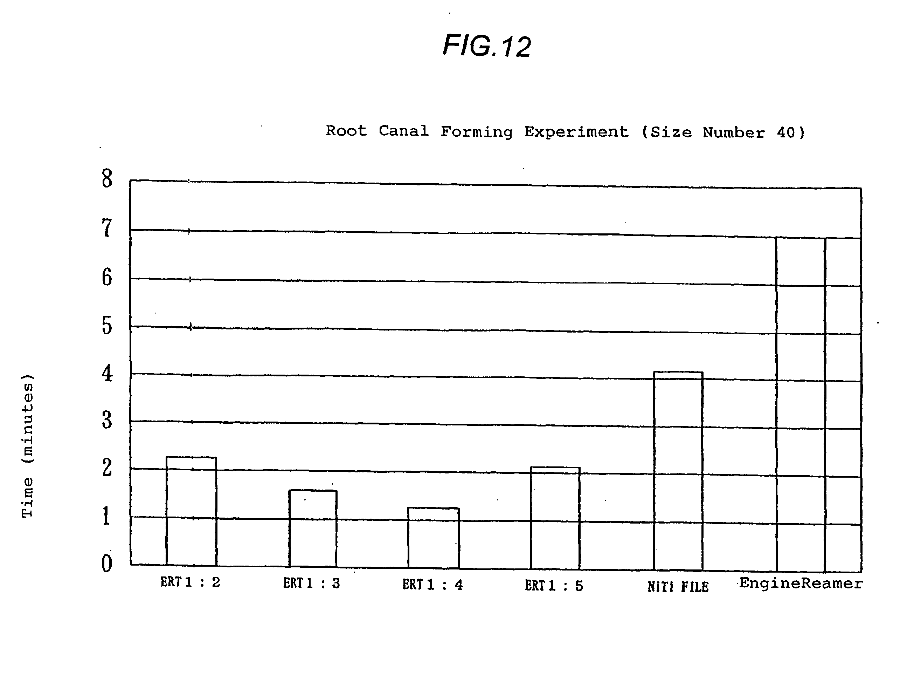

A preferred embodiment of the aforementioned reamer will hereinafter be described with reference to the drawings. FIG.1 is an explanatory view showing an entire structure of a reamer; FIG.2 is an explanatory view showing a cross sectional shape of an working portion viewed from II-II of FIG.1; FIG.3 is a schematic view showing an example of a twist molding apparatus used when forming an working portion; FIG.4 is an explanatory view showing a cross sectional shape of an intermediary material; FIG.5 is a cross sectional view of an working portion when the intermediary material having a cross sectional shape shown in FIG.4 is formed by twist-processing; FIG.6 is a view showing the results of root canals formed with a reamer of this embodiment, a NiTi file and an engine reamer; FIG.7 is a view comparing the time for forming a root canal with use of plural test pieces of this invention, a NiTi file, and an engine reamer, where all of which are size number 20 (0.2 mm distal end diameter); FIG.8 is a view showing a result of a comparison of the bending torque of plural test pieces of this invention, a NiTi file, and an engine reamer; FIG.9 is a view showing a result of a comparison of the twisting torque of plural test pieces of this invention, a NiTi file, and an engine reamer; FIG.10 is a view showing a comparison in a twist-fracture angle of plural test pieces of this invention, a NiTi file, and an engine reamer; FIG.11 is a view comparing the time for forming a root canal between a test piece of this invention and a test piece before twist-processing is applied thereto; FIG.12 is a view comparing the time for forming a root canal with use of plural test pieces of this invention, a NiTi file, and an engine reamer, where all of which are size number 40 (0.4 mm distal end diameter).

The reamer regarding this invention is attached to a handpiece and is driven by an engine for allowing preferable operation when cutting a root canal wall; although the reamer is driven to rotate at a high rate by the engine, the reamer prevents the root canal wall from becoming dug into and prevents deviation without excessively cutting the root canal wall.

A reamer *A* shown in FIG.1 is comprised of: a working portion 1 having a cross section as shown in FIG.2 and a twist with a prescribed pitch; a shaft portion 2 extending from the working portion 1 and having a circular cross section; a joint portion 3 coupled to form a united body with the shaft portion 2 for attachment to a handpiece (not shown); and a distal end portion 4 formed at a distal end of the working portion 1.

The working portion 1 and the shaft portion 2 can be twist-processed and are formed from a metal being corrosion-resistant during transportation. An example of such metal is stainless steel, and more preferably, an austenitic stainless steel is to be used. In this embodiment, a cold fiber drawing process is applied upon an austenitic stainless steel wire material so that the austenite structure could be stretched into a fiber-like material and form the working portion 1 and the shaft portion 2. More particularly, twist-processing with a cold fiber drawing processed austenitic stainless steel material lowers the risk of fracture (fracture from fatigue, fracture from twisting), as opposed to processing with a shape-memorizing alloy and forming the twist portion by a grinding method, in which such grinding method cuts off the fiber-like structure and increases the possibility of fracture since the structure remains only at the core of the working portion.

As long as the shaft portion 2 can precisely maintain a coaxial state with respect to the handpiece of the working portion 1, there is no particular restriction regarding the coupling between the shaft portion 2 and the joint portion 3. The shape and size of the joint portion 3 corresponds to the shape and size of the chuck portion of the hand piece that is to be used, and are not to be defined with a single particular shape or size.

The working portion 1 has a tapered shape becoming narrower from the shaft portion 2 to the distal end portion 4, and thus has different width in correspondence to number (size); such taper and shape can be predetermined to conform with the ISO standard, but are not necessarily required to conform with such standard and instead could have a range moderately different from such standard.

The working portion 1 of the reamer A has a cross section shaped in a manner shown in FIG.2 (a view of looking at the working portion 1 in a direction from the shaft portion 2 to the distal end portion 4). That is, a cutting portion 1c with a slight protrusion projecting in a direction of arrow *a* and a flank portion 1d arranged opposite from the cutting portion 1c are formed on both sides of the working portion 1 in a diametral direction, and the cutting portion 1c formed on one side and the flank portion 1d formed on the other are connected with two chords (faces) 1b. Therefore, the surrounding of a portion connecting the chord 1b and the cutting portion 1c serves as a face.

With such working portion 1, the cutting portion 1c is formed at a portion recessed inward from the circumference of the original circle toward a center 5. Accordingly, the cutting quality would deteriorate, and the working portion 1 would cut by rubbing against the surface of the root canal wall instead of cutting by raking the surface of the root canal wall when attached to a handpiece and rotated in a direction of arrow *a*. Hence, the root canal wall will not be cut excessively, nor will digging into the root canal wall and deviation be created.

Next, a process of forming the working portion 1 of the reamer *A* regarding this invention will be explained with reference to FIG.3 to FIG.5.

A wire material, which is processed into a thickness substantially equal to that of the shaft portion 2 of the reamer *A* by means of cold fiber drawing, is cut into a length for processing the working portion 1 and the shaft portion 2, and is ground into a tapered form with consideration for the twist-processing of the portion corresponding to the working portion 1, so as to form a rod S1 comprised of a tapered portion corresponding to the working portion 1 and a straight portion corresponding to the shaft portion 2. Subsequently, as shown in FIG.4 (a), both sides of the rod S1 are ground so that a cross section of the rod S1 would have two opposing chords 1b and two arcs 1a at the end portions of the two opposing chords, and would also have a drum-like shape with a center 5 left remaining.

The reasons why the center 5 is left to remain are, for example, concentrating to one side causes directionality in bending behavior of the reamer *A* and leads to fracture from fatigue, and maintaining of size precision is difficult.

Regarding the foregoing drum-like cross section, in a manner as a rod S2 shown in FIG.4 (b), the two chords 1b are not necessarily required to be parallel with each other. That is, the chords 1b can be inclined, or one of the chords 1b can be parallel with the diameter while the other chord 1b is inclined. When the two chords 1b are formed opposite to each other by grinding the material to cut away the portion corresponding to the working portion 1, the two chords 1b can be any of the above, as long as the arc 1a is left remaining on each end of the chords 1b and as long as the center 5 is left remaining.

When the portion corresponding to the working portion 1 is cut away by the two chords 1b, there is to be no particular limitation regarding the ratio of the distance between the two chords 1b on the center line to the diameter (hereinafter referred as "side ratio", to which the distance between the two chords 1b is defined as 1). However, as the side ratio becomes closer to 1, the cross sectional area of the working portion 1 will increase to cause loss of flexibility and deterioration of tracing property for the root canal; on the other hand, as the side ratio is increased (shortening the distance between the two chords 1b, that is, forming the working portion 1 into a thinner shape), flexibility will increase and the tracing property for the root canal will improve. In both embodiments in FIG.4, the chord 1b is formed as a long side and the arc 1a is formed as a short side, which results to a small side ratio.

Determining the value of the side ratio depends greatly on the relation with flexibility and stiffness of the working portion 1; accordingly, based on the results of the experiments of producing and testing numerous test pieces with different side ratios, the most favorable reamer is chosen in this embodiment.

By twist-processing the material in which the portion corresponding to the working portion 1 has a cross section formed into a drum shape, the working portion 1 can be formed having a twist with a prescribed pitch as shown in FIG.1.

In twist-processing a material, a pair of holding jigs 11 and a pair of support jigs 12 are oppositely arranged at a prescribed distance, and the portion corresponding to the working portion 1 is inserted through a molding space created between the holding jigs 11 and the support jigs 12, as shown in FIG.3; in such state, the shaft portion 2, having the cutting portion 1c with a spiral groove on one end, is formed by rotating the holding jigs 11, the support jigs 12, and the material in relation to each other in a direction of arrow ***b***, while advancing the holding jigs 11, the support jigs 12, and the material in relation to each other in an axial direction (axial direction of the material). In such twist-processing procedure, the holding jig 11 presses and crushes one pair of diagonally opposite corners ***X,X,*** and the other pair of diagonally opposite corners ***Y,Y*** is employed with plastic deformation, and as a result the cutting portion 1c is formed (see FIG.2).

With such plastic deformation, the holding jigs 11 presses and restrains the intersecting portion between the original chord 1b and the arc 1a at the upstream side in the direction of arrow ***a***, that is, at the upper right side and the lower left side in FIG.2 and FIG.5 (a), (b) so as to form the flank portion 1d shaped as a curved line by allowing the chord 1b to transform into a gentle curved line. Although, the curved line of the flank portion 1d extends to a portion of the original arc 1a, the arc 1a deforms without maintaining the original shape thereof.

Meanwhile, free from restraint by the respective jigs 11, 12, the downstream side in the direction of arrow ***a***, that is, the lower right side and the upper left side in the drawings could deform freely. In this deformation, the end portions thereof are bent or protruded in association to the forming of the flank portion 1d, and the original arc 1a and the intersecting portion between the original arc 1a and the chord 1b deform in a collapsing manner; as a result, the intersecting portion deforms from an apparent tip shape into a curved shape and deforms into an arc-like shape with a radius smaller than that of the original arc 1a so that the cutting portion 1c is formed.

In the manner as the above, the material, in which two arcs 1a on both sides and a center 5 are left remaining from grinding two chords 1b and cutting away a ground taper material corresponding to the working portion 1, is inserted through the molding space created by a pair of holding jigs 11 and support jigs 12; subsequently, the respective holding jigs 11 and the support jigs 12 are rotated in relation to each other while being advanced in an axial direction, and the distance between the holding jigs 11 are drawn closer or separated in correspondence with the taper shape of the material; as a result, the working portion 1 can be formed having a predetermined taper (e.g. 2/100) and a pitch.

In the twist-process, the degree and shape of plastic deformation occurred upon the material should preferably be uniform. Nevertheless, difference in the degree of deformation and difference in deformation shape is anticipated within the boundaries of allowance error (e.g., the difference in the manufacture lot of the material, the slight difference in the contacting angle of the material against holding jig 11).

Even if difference in deformation shape or difference in the degree of deformation occurs in the plastic deformation of the reamer **A**, as long as the material, the means of the material, and the operation procedure is the same in the twist-process, such difference in deformation shape or difference in the degree of deformation could be allowed to be inside a permissible error range. That is, even if there is a slight difference in the shape of deformation or in the degree of deformation, such difference can be accepted as within a permissible error range as long as the means of the material and the operation procedure are the same.

The twist-processed working portion 1 demonstrates a uniform curving performance as a whole since directionality in bending behavior resulting from the drum shaped changes in association with the twist-process. Accordingly, the root canal wall can be cut with a substantially uniform force during the rotating procedure.

After the working portion 1 is formed, the reamer *A* is produced by forming the distal end portion 4 of the working portion 1 and by forming the shaft portion 2 into a united body with the joint portion 3. It is now to be noted that the shaft portion 2 and the joint portion 3 are not necessarily required to form a united body after the forming of the working portion 1, but can also form a united body prior to the forming of the working portion 1.

Test pieces for the reamer ***A*** having a working portion with a side ratio of 1:2 [Abbreviation for product name Engine RecTangular reamer (hereinafter referred as ERT) 1:2, 60 % area ratio with respect to the area of original circle] , 1:3 (ERT 1:3, 40% area ratio with respect to the area of original circle), 1:4 (ERT 1:4, 30% area ratio with respect to the area of original circle), and 1:5 (ERT 1:5, 25% area ratio with respect to the area of original circle), a NiTi file shown in FIG.13, and an engine reamer shown in FIG.13 were produced, and such test pieces were used in performing root canal forming experiments by using root canal models for comparing the time required to form a root canal and for performing experiments of comparing bending torque, twisting torque, and twist fracture angle. The results of the above experiments will be explained in FIG.6 to FIG.12.

Shown in FIG.7 to FIG.11 are results of values obtained by experimenting each of the three test pieces with a uniform size number of 20, and a uniform taper of 2/100. Shown in FIG.12 is a result of a root canal forming experiment with a size number of 40 and a taper of 2/100.

The method and results of the root canal forming experiment will be described with reference to FIG.6, FIG.7, FIG.11 and FIG.12. In the root canal forming experiment, a curved root canal model 21 [shown in FIG.6 (a)] made from a transparent plastic resin with a cutting feel extremely similar to ivory is used; a root canal model 22 is formed with a depth of 10mm prior to the beginning portion of a curve portion (a straight portion of a prescribed depth) by use of a Peeso reamer (not shown); each test piece is used upon the root canal model 22 to form the curved portion; the shape of the curve portion and elongation is observed; and the forming time is measured.

The term "elongation" is to describe the restitutive deformation in the twisted shape of the working portion caused by the torque applied to the test piece when the working portion of the test piece has dug into the root canal wall.

In the above experiment, each test piece is attached with a hand piece and is rotated 260 rpm by the driving of an engine, and such handpiece is used by the same skilled operator so as to exclude individual difference.

Shown in FIG.6 and FIG.7 are the experiment results of forming a root canal with size number 20.

As shown in FIG.6 (b), the reamer ***A*** of this invention could flexibly trace along the curve of the root canal model 22, and could satisfactory form a root canal regardless of side ratio. Elongation did not occur during the forming of the root canal regardless of side ratio, and a satisfactory operating feel was provided during operation without requiring particular force since the reamer ***A*** can advance with a suitable degree of force.

As shown in FIG.7, the required time for forming a root canal with the reamer A of this invention is approximately 0.6 minutes to 1.2 minutes, and the ERT 1:4 type reamer completed forming in the least time. Meanwhile, the reamer with a small side ratio (ERT 1:2 type reamer) or the reamer with a large side ratio (ERT 1:5type reamer) required longer time for forming the root canal.

As shown in FIG.6 (c), in using the NiTi file, the root canal could be formed along the curve; nevertheless, the NiTi file slightly deviated from the curve and a deviated portion 23 was created at a portion substantially in the middle of the curve. More particularly, elongation occured soon after the cutting of the root canal model 22 had begun, and was turned into a substantially reverse twisted state at a portion 2mm to 3mm from the distal end portion. In continuing the process, two of the test pieces fractured at a portion approximately 2mm to 3mm from the distal end portion of the working portion. However, one of the test pieces was able to cut the entire curve portion.

As shown in FIG.7, the required time for forming a root canal and the time of the fracture was approximately 1.3 minutes.

As shown in FIG.6 (d), in using the engine reamer, the engine reamer had perforated the curve portion of the root canal model 22 and deviated therefrom; accordingly, since a deviated portion 24 was created at a portion substantially extending from the straight portion, the experiment was stopped when the deviated portion 24 was created. At such time, elongation did not occur in the working portion of the engine reamer.

Although the root canal forming experiment ended in failure, as shown in FIG. 7, the time for the forming of the deviated portion 24 was approximately 2.8 minutes.

According to the results above, with the size number 20, it can be said that: the reamer ***A*** of this invention can trace along the curve portion and satisfactorily form a root canal regardless of side ratio, and shorten the time required for forming a root canal; although the NiTi file can trace along the curve portion, the NiTi file has an unsatisfactory tracing property, causes elongation in a short time, and results to difficulty in satisfactorily forming a root canal; and the engine reamer lacks tracing property in respect to the curve portion, deviates therefrom, and is unable to satisfactorily form a root canal.

Although the root canal forming time with the ERT 1:2 type reamer and the root canal forming time with the NiTi file may seem relatively the same without having much difference, the ERT 1:2 reamer is more preferable since the ERT 1:2 reamer can satisfactorily trace along the curve, as opposed to the NiTi file having a high risk of creating the deviated portion 23 at the curve portion.

FIG.12 shows the tested result of the root canal forming time by performing a root canal forming experiment without use of size number 20 but with size number 40. It is now to be noted that this experiment was performed in the same manner and procedure as that of the foregoing size number 20.

As apparently shown in FIG.12, the root canal forming time of the reamer ***A*** of this invention of the ERT 1:2 type to the ERT 1:5 type are ranged from approximately 1.2 minutes to 2.2 minutes; on the other hand, the NiTi file required approximately 4.2 minutes, and the engine reamer required approximately 7 minutes.

In the same manner as shown in FIG.6 (b) to FIG.6 (d), the reamer ***A*** of this invention satisfactorily formed a root canal along the curve portion regardless of side ratio; however, the NiTi file did not necessarily form a root canal satisfactorily along the curve portion, but formed a deviated portion at the curve portion, and resulted to fracture at the distal end portion of the working portion; the engine reamer was unable to form a root canal along the curve portion, and created a deviated portion at a portion extending from the substantially straight portion.

According to the results of the foregoing experiments, the following points can be said. The reamer ***A*** of this invention can satisfactorily form a root canal regardless of side ratio when driven by an engine. Although the NiTi file is capable of tracing along the curve portion of the root canal, the NiTi file sometimes digs into the root canal wall and leads to deviation when driven by an engine. Since the engine reamer lacks flexibility, the engine reamer cuts in a straight direction without being able to trace along the curve portion of the root canal and results to deviation when driven by an engine.

Next, the result of a root forming experiment by using the reamer ***A*** of this invention having a twist-processed working portion 1 and by using a material which has a portion corresponding to the working portion being cut away by two lines to leave the arcs 1a on both sides and the center 5 remaining, that is, a material for producing the reamer *A*, will be explained with reference to FIG.11.

In FIG.11, "prior-twisting" indicates the material state of the reamer *A*, and "post-twisting" indicates the reamer ***A***. Each of the test pieces was produced in correspondence to size number 40. As apparently shown in FIG.11, the "post-twisting" test piece required approximately 3 minutes to form a root canal, while the "prior-twisting" test piece required approximately 5 minutes to form a root canal. This leads to the conclusion that the twisting causes a change of rake angle, which is formed from the cutting portion 1c and the chord 1b of the working portion 1, results to an increase in cutting quality.

Accordingly, curving property and cutting quality could improve more by twist-processing the working portion 1 than by not performing such twist-process.

Next, the experiment results comparing the bending torque, the twisting torque, and the twist fracture angle regarding the reamer ***A*** of this invention, the NiTi file, and the engine reamer will be explained.

The experiment of the bending torque was performed in accordance to the ISO standard, in which the torque is measured by clamping a portion distanced at a prescribed length (3mm) from the distal end portion of the working portion, and bending the side toward the shaft portion 2 in a prescribed angle (45 degrees) with the clamped portion as a center position thereof. The experiment result is shown in FIG. 8. In FIG.8, the largest torque is required for the engine reamer, followed by the reamer ***A*** of type ERT 1:2, the NiTi file, and the reamer ***A*** of type ERT 1:5 having the smallest torque.

This shows that the engine reamer lacks the most flexibility, followed by the reamer ***A*** of type ERT 1:2, the NiTi file, and the reamer *A* of type ERT 1:5 having the most flexibility. Accordingly, flexibility would enhance and tracing property upon the curve portion of the root canal would be more favorable, as the side ratio of the reamer ***A*** of this invention becomes larger.

In the experiment of the twisting torque, in the torque is measured by: clamping a portion distanced at a prescribed length from the distal end portion of the working portion; clamping another portion separated in a prescribed distance from the clamped portion; and relatively twisting both clamped portions to a prescribed angle. The experiment result is shown in FIG.9. In FIG.9, the largest torque is required for the engine reamer, followed by the reamer ***A*** of type ERT 1:2, the NiTi file, and the reamer ***A*** of type ERT 1:5 having the smallest torque.

This shows that the engine reamer has the most twisting rigidity and is resistant to twist deformation (e.g. stretching, twisting oppositely), followed by the reamer ***A*** of type ERT 1:2, the NiTi file, and the reamer ***A*** of type ERT 1:5 being easiest to become twist deformed. The property of having a small twisting torque was unfavorable for the conventional reamer or file since such reamer or file would easily elongate when having dug into the root canal wall; however, as apparently shown in the foregoing root canal forming experiment results, even if the twisting torque is small, this would not be a problem for the reamer ***A*** of this invention since digging into the root canal wall and deviation are difficult to be caused by the reamer ***A***. Although twisting rigidity is a characteristic opposite of flexibility, excellent flexibility is required for tracing along a curved root canal. Therefore, with mechanical grinding, it could be said that the reamer ***A*** of this invention has a property superior than that of the conventional reamer or file.

The twist fracture angle experiment was performed in accordance to the ISO standard, in which the angle of fracture when twisted in one direction is measured. The experiment result is shown in FIG.10. FIG.10 shows that the reamer ***A*** of type ERT 1:4 as well as type ERT 1:5 can both withstand twisting of approximately 1600 degrees, and such reamers are followed by the NiTi file capable of being twisted approximately 1400 degrees, the reamer ***A*** of type ERT 1:3, and the reamer ***A*** of type ERT 1:2 and the engine reamer both capable of being twisted substantially to the same degree.

According to the results of each of the foregoing experiments, the reamer *A* of this invention has a small bending torque and a high flexibility regardless of side ratio, and is capable of tracing along the curve portion of the root canal. Further, although there is a possibility of elongation in association with digging into the root canal wall due to small twisting torque, the shape of the cutting portion 1c formed during twist-process prevents digging into the root canal wall and leads to a satisfactory forming of a root canal in a short time. Further, the reamer ***A*** has a high twist fracture angle and is difficult to fracture.

Since the NiTi file has a small bending torque and a high flexibility, the NiTi file was expected to satisfactorily trace the curve portion of the root canal; however, a digging into the root canal wall was caused by the high cutting quality of the NiTi file, and the digging into the root canal wall lead to elongation and resulted to fracture of the NiTi in a short period. Accordingly, the NiTi file apparently is inferior in tracing efficiency and durability in comparison with the reamer ***A*** of this invention.

Since the engine reamer has a large bending torque and lacks flexibility, the engine reamer could not trace along the curve portion of the root canal and practically was unable to form a root canal. Accordingly, despite the fact that the engine reamer can be used satisfactorily when forming a straight portion of the root canal, the engine reamer cannot be used for forming a curved portion of the root canal. Accordingly, the engine reamer apparently is inferior in comparison with the reamer ***A*** of this invention.

It is now to be noted that when a reamer is formed with a twisted working portion, which is cut away by three lines to leave three arcs and a center remaining along the circumference thereof for forming a triangular shaped cross section, the rake angle formed at the contacting portion between each of the lines and arcs will become larger, the root canal wall will be dug into, and the reamer ***A*** will become easy to fracture.

When a reamer is formed with a twist-processed working portion, which has a cross section cut away by one line to leave one arc and a center remaining along the circumference thereof, the cutting amount will decrease and much time will be required to form a root canal. Such reamer will lack flexibility. Further, when the working portion is left in the manner as a circle, the forming of a root canal will be impossible since the cutting portion will not be formed. Further, the reamer will lack flexibility and will become easy to fracture due to the large cross sectional area thereof.

Although in the foregoing embodiment, the taper is 2/100, and the size numbers are number 20 and number 40, such specifications are not to be restrictive, and in this invention, since the thickness of the cross section can be altered by adjusting the distance of the two arcs, the flexibility and the like can be adjusted by a variety of sizes and tapers. More specifically, the taper should preferably range from 1/100 to 20/100, and the size number should preferably range from number 15 to number 60.

Although the twisting angle in the foregoing embodiment is 25 degrees, since the cross section of this invention is formed into a shape for prevention of digging into the root canal wall, the effect of preventing can still be maintained even when the range of the twisting angle is broadened to a certain extent.

As explained above, with the reamer of this invention, the working portion is cut out by two lines into a shape where two arcs and the center are left remaining, and is twisted for forming a spiral shape; this allows the forming of the cutting portion where plastic deformation occurs at the intersecting portion between the arcs and the lines during the twist-process, and also allows the forming of the rake portion shaped from the cutting portion and the lines. The cutting portion formed in association with the twist-process is formed without any sharp edges to prevent from digging into the root canal wall.

Since the shape of the cross section of the working portion is formed of two arcs and two lines, the bending rigidity at the cross section can be reduced by arranging the two lines at a suitable distance apart from each other. A substantially equal bending property as a whole can be obtained by twisting the working portion. Accordingly, a high flexibility can be obtained to allow satisfactory tracing performance along the curve portion of the root canal.

The foregoing description of a preferred embodiment of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated. It is intended that the scope of the invention not be limited by the specification, but be defined by the claims set forth below.

## Claims

1. A dental reamer comprising:
a shaft portion (2) having a cutting portion formed in a spiral shape; and
a joint portion (3) coupled to an end of the shaft portion;
**characterized in that** the shaft portion is formed by twisting a rod having a prescribed cross section surrounded with two chords (1b) formed on both sides with respect to a center of a circle and two arcs (1a) connecting the two chords, in which the prescribed cross section has one pair of diagonally opposite corners being twisted by pressing the one pair of diagonally opposite corners (1d) in a direction along the arcs to form the cutting portion (1c) at the other pair of diagonally opposite corners.

2. The dental reamer according to claim 1, wherein the rod is a tapered rod becoming narrower toward a distal end of the rod.

3. The dental reamer according to claim 1,
wherein the chord of the rod is longer than the arc, and
wherein the chord is a long side of the prescribed cross section, and the arc is a short side of the prescribed cross section.

4. The dental reamer according to claim 3,
wherein ratio of the short side and the long side is set in a range from I:2 to 1:5.

5. The dental reamer according to claim 3,
wherein the prescribed cross section of the rod has a pair of arcs having the same length and a pair of the chords being parallel to each other.

6. The dental reamer according to claim 3,
wherein the prescribed cross section of the rod has a pair of arcs having different length and a pair of the chords not being parallel to each other.

7. The dental reamer according to claim 1, wherein the rod is an austenitic stainless steel.

8. A method of manufacturing a dental reamer comprising the steps of:
forming a shaft portion having a cutting portion formed in a spiral shape by gradually twisting a rod from one end to the other end of the rod, the rod having a prescribed cross section surrounded with two chords (1b) formed on both sides with respect to a center of a circle and two arcs (1a) connecting both chords; and
forming a cutting portion (1c) at one pair of diagonally opposite corners by twisting the other diagonally opposite corners (1d) by pressing the one pair of diagonally opposite corners in a direction along the arcs with respect to the prescribed cross section.

9. The method of manufacturing a dental reamer according to claim 8,
wherein the rod is a tapered rod becoming narrower toward a distal end of the rod.

10. The method of t manufacturing a dental reamer according to claim 8,
wherein the chord of the rod is longer than the arc, and
wherein the chord is a long side of the prescribed cross section, and the arc is the short side of the prescribed cross section.

11. The method of manufacturing a dental reamer according to claim 10,
wherein the prescribed cross section of the rod has a pair of arcs having the same length and a pair of the chords being parallel to each other.

12. The method of manufacturing a dental reamer according to claim 11,
wherein ratio of the short side and the long side is set in a range from 1:2 to 1:5.

13. The method of manufacturing a dental reamer according to claim 10,
wherein the prescribed cross section of the rod has a pair of arcs having different length and a pair of the chords not being parallel to each other.

14. The method of manufacturing a dental reamer according to claim 8,
wherein the rod is an austenitic stainless steel.

## Patentansprüche

1. Dentale Reibahle, die nachfolgendes umfasst:
einen Schaftstück (2), das einen in einer spiralförmigen Form ausgeformten Schneidebereich umfasst; und
ein Verbindungsstück (3), das mit einem Ende des Schaftstücks verbunden ist;
**dadurch gekennzeichnet, dass** das Schaftstück durch Verdrehen eines Stabs ausgeformt ist, der einen festgelegten Querschnitt aufweist und der von zwei auf beiden Seiten in Bezug auf ein Zentrum eines Kreises ausgeformten Sehnen (1b) und zwei die zwei Sehnen verbindenden Bögen (la) umgeben ist, wobei der festgelegte Querschnitt ein Paar von diagonal gegenüberliegenden Ecken aufweist, die verdreht werden durch Drücken des einen Paars diagonal gegenüberliegender Ecken (1d) in einer Richtung entlang der Bögen, um den Schneidebereich (1c) bei dem anderen Paar der diagonal gegenüberliegenden Ecken auszuformen.

2. Dentale Reibahle nach Anspruch 1, wobei der Stab ein spitz zulaufender Stab ist, der in Richtung eines distalen Endes des Stabs schmaler wird.

3. Dentale Reibahle nach Anspruch 1,
wobei die Sehne des Stabs länger ist als der Bogen, und
wobei die Sehne eine lange Seite des festgelegten Querschnitts ist, und der Bogen eine kurze Seite des festgelegten Querschnitts ist.

4. Dentale Reibahle nach Anspruch 3,
wobei das Verhältnis zwischen der kurzen Seite und der langen Seite in einem Bereich von 1:2 bis 1:5 festgelegt ist.

5. Dentale Reibahle nach Anspruch 3,
wobei der festgelegte Querschnitt des Stabs ein Paar von Bögen, die dieselbe Länge aufweisen und ein Paar von Sehnen, die zu einander parallel sind, aufweist.

6. Dentale Reibahle nach Anspruch 3,
wobei der festgelegte Querschnitt des Stabs ein Paar von Bögen, die eine unterschiedliche Länge aufweisen und ein Paar von Sehnen, die nicht zu einander parallel sind, aufweist.

7. Dentale Reibahle nach Anspruch 1, wobei der Stab ein austenitischer rostfreier Stahl ist.

8. Verfahren zur Herstellung einer dentalen Reibahle, das die nachfolgenden Arbeitsschritte umfasst:
Ausformen eines Schaftstücks, das einen durch fortschreitendes Verdrehen eines Stabs von einem Ende zum anderen Ende des Stabs in einer spiralförmigen Form ausgeformten Schneidebereich aufweist, wobei der Stab einen festgelegten Querschnitt aufweist, der von zwei auf beiden Seiten in Bezug auf ein Zentrum eines Kreises ausgeformten Sehnen (1b) und zwei beide Sehnen verbindenden Bögen (1a) umgeben ist, und
Ausformen eines Schneidebereichs (1c) bei einem Paar diagonal gegenüber liegende Ecken durch Verdrehen der anderen diagonal gegenüber liegenden Ecken (1d) durch Drücken des einen Paars diagonal gegenüberliegender Ecken in einer Richtung entlang der Bögen in Bezug auf den festgelegten Querschnitt.

9. Verfahren zur Herstellung einer dentalen Reibahle nach Anspruch 8, wobei der Stab ein spitz zulaufender Stab ist, der in Richtung eines distalen Endes des Stabs schmaler wird.

10. Verfahren zur Herstellung einer dentalen Reibahle nach Anspruch 8, wobei die Sehne des Stabs länger ist als der Bogen, und
wobei die Sehne eine lange Seite des festgelegten Querschnitts ist, und der Bogen die kurze Seite des festgelegten Querschnitts ist.

11. Verfahren zur Herstellung einer dentalen Reibahle nach Anspruch 10, wobei der festgelegte Querschnitt des Stabs ein Paar von Bögen, die dieselbe Länge aufweisen und ein Paar von Sehnen, die zu einander parallel sind, aufweist.

12. Verfahren zur Herstellung einer dentalen Reibahle nach Anspruch 11, wobei das Verhältnis der kurzen Seite und der langen Seite in einem Bereich von 1:2 bis 1:5 festgelegt ist.

13. Verfahren zur Herstellung einer dentalen Reibahle nach Anspruch 10, wobei der festgelegte Querschnitt des Stabs ein Paar von Bögen, die eine unterschiedliche Länge aufweisen und ein Paar von Sehnen, die nicht zu einander parallel sind, aufweist.

14. Verfahren zur Herstellung einer dentalen Reibahle nach Anspruch 8, wobei der Stab ein austenitischer rostfreier Stahl ist.

## Revendications

1. Alésoir dentaire comprenant :
- une partie de broche (2) présentant une partie de coupe en forme de spirale, et
- une partie de jointure (3) couplée à une extrémité de la partie de broche ;
**caractérisé en ce que**
la partie de broche est formée en tordant une tige présentant une coupe transversale prescrite et entourée de deux cordes (1b) formées des deux côtés par rapport à un centre d'un cercle et deux arcs (la) reliant les deux cordes, dans laquelle la coupe transversale prescrite présente une première paire de coins diagonalement opposés et tordus en pressant la première paire de coins diagonalement opposés (1d) dans une direction le long des arcs pour former la partie de coupe (1c) au niveau de l'autre paire de coins diagonalement opposés.

2. Alésoir dentaire selon la revendication 1,
dans lequel
la tige est une tige conique qui se rétrécit vers une extrémité distale de la tige.

3. Alésoir dentaire selon la revendication 1,
dans lequel
la corde de la tige est plus longue que l'arc, et
la corde est un côté long de la coupe transversale prescrite, et l'arc est un côté court de la coupe transversale prescrite.

4. Alésoir dentaire selon la revendication 3,
dans lequel
le ratio du côté court et du côté long est compris dans une plage de 1:2 à 1:5.

5. Alésoir dentaire selon la revendication 3,
dans lequel
la coupe transversale prescrite de la tige présente une paire d'arcs ayant la même longueur et une paire de cordes parallèles entre elles.

6. Alésoir dentaire selon la revendication 3,
dans lequel
la coupe transversale prescrite de la tige présente une paire d'arcs de longueurs différentes et une paire de cordes qui ne sont pas parallèles entre elles.

7. Alésoir dentaire selon la revendication 1,
dans lequel
la tige est en acier inoxydable austénitique.

8. Procédé de fabrication d'un alésoir dentaire, comprenant les étapes consistant à :
former une partie de broche présentant une partie de coupe en forme de spirale en tordant graduellement une tige d'une extrémité vers l'autre extrémité de la tige, la tige présentant une coupe transversale prescrite et entourée de deux cordes (1b) formées des deux côtés par rapport à un centre d'un cercle et deux arcs (la) reliant les deux cordes ; et
former une partie de coupe (1c) au niveau d'une paire de coins diagonalement opposés en tordant les autres coins diagonalement opposés (1d) tout en pressant la première paire de coins diagonalement opposés dans une direction le long des arcs par rapport à la coupe transversale prescrite.

9. Procédé de fabrication d'un alésoir dentaire selon la revendication 8,
dans lequel
la tige est une tige conique qui se rétrécit vers une extrémité distale de la tige.

10. Procédé de fabrication d'un alésoir dentaire selon la revendication 8,
dans lequel
la corde de la tige est plus longue que l'arc, et
la corde est un côté long de la coupe transversale prescrite, et l'arc est un côté court de la coupe transversale prescrite.

11. Procédé de fabrication d'un alésoir dentaire selon la revendication 10,
dans lequel
la coupe transversale prescrite de la tige présente une paire d'arcs ayant la même longueur et une paire de cordes parallèles entre elles.

12. Procédé de fabrication d'un alésoir dentaire selon la revendication 11,
dans lequel
le ratio du côté court et du côté long est compris dans une plage de 1:2 à 1:5.

13. Procédé de fabrication d'un alésoir dentaire selon la revendication 10,
dans lequel
la coupe transversale prescrite de la tige présente une paire d'arcs de longueurs différentes et une paire de cordes qui ne sont pas parallèles entre elles.

14. Procédé de fabrication d'un alésoir dentaire selon la revendication 8,
dans lequel
la tige est en acier inoxydable austénitique.
